# EUROPEAN PATENT APPLICATION

(11) **EP 1 968 251 A1**
(43) Date of publication of application: **10.09.2008**
(21) Application number: 07103878.0
(22) Date of filing: 09.03.2007
(51) Int. Cl.: H04L 12/56, H04L 12/18

(54) **Method and apparatus for QoS resource reservation and configuration of multicast network resources**

(71) Applicant: NTT DoCoMo, Inc., Tokyo (JP)
(72) Inventor: Neto, Augusto, 3030-049, Coimbra (PT); Cerqueira, Eduardo, 3030-049, Coimbra (PT); Curado, Marilia, 3040-688, Coimbra (PT); Monteiro, Edmundo, 3040-688, Coimbra (PT); Mendes, Paulo, 81673, Munich (DE)
(74) Representative: Betten & Resch

(57) **Abstract**

A method for performing quality of service (QoS) resource reservation and configuration of multicast network resources for multicast sessions in a network, said method comprising:
in response to a request from a receiver to receive with some QoS requirement a session originating from a source, performing the following:
forwarding a reservation message along the downstream path from said source to said receiver through nodes of said network, whereas each node along said path performs the following:
a) in response to receiving said reservation message, reserving QoS resources and configuring multicast resources for the link from said node to the next downstream node in said path;
b) forwarding the reservation message to said next downstream node;
c) repeating said steps a) and b) until in each node along said path from said source to said receiver said QoS resources are reserved and said multicast resources are configured.

## Description

### FIELD OF INVENTION

The present invention relates to a method and an apparatus for performing quality of service (QoS) resource reservation and configuration of multicast network resources for multicast sessions in a network.

### BACKGROUND OF THE INVENTION

The distribution of QoS sensitive multicast sessions to groups of users over heterogeneous networks is a hard task, because it requires the control of the multicast trees taking into account the QoS characteristics of the network classes installed in the path from the sender to the receivers. Furthermore, QoS assurances are needed in multicast environments with different network capabilities and domains with different multicast transport technologies. In addition to the heterogeneity support, the data path must satisfy at least the committed QoS requirements for the multicast sessions in the route from the sender to the receivers, allowing the allocation of QoS resources and the multicast control in networks with asymmetric routes.

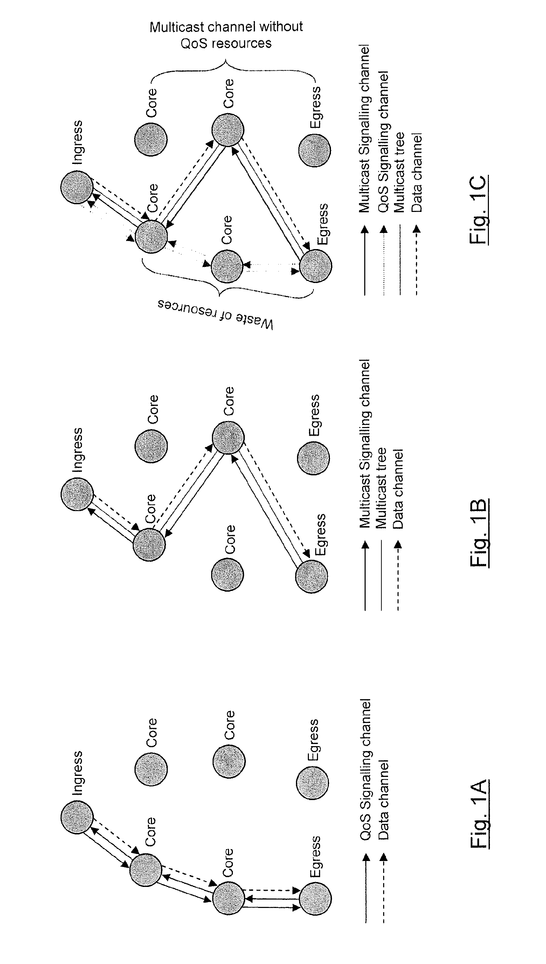

The coexistence of QoS and multicast approaches for session-content distribution to groups of users with assured resources has been tackled for situations where centralised or distributed QoS-aware multicast routing approaches compute the best paths between the source and the receivers, taking into account QoS constraints (e.g., available bandwidth and/or service class). However, in these approaches the session-content is forwarded along the multicast tree built in the selected path without the accomplishment of QoS resource reservation. Moreover, existing solutions reserve the QoS resources and install multicast state through a two-pass signalling scheme, which requires the use of one resource reservation scheme to control QoS resources and another solution to control multicast tree construction in the previously reserved-path. In comparison with single-pass signalling schemes, the session set-up delay may be increased by the additional signalling overhead and the use of different solutions for accomplishing resource reservations and the building of multicast trees may increase the complexity of the system as well as the state overhead. Moreover, different signalling direction for configuring QoS and multicast resources (e.g., downstream and upstream respectively) may be influenced by routing asymmetries, where different paths may be assigned by the unicast routing. As shown in Fig. 1A, QoS resources in class based networks are allocated on the path from the sender towards the receiver. Fig. 1 shows this for a path from an ingress node (to which not shown a egress node of another upstream network or a not shown source may be connected) to an egress node (to which a not shown receiver or a not shown downstream network may be connected). The signalling for reserving QoS resources starts at the ingress node, goes downstream through the core nodes until it reaches the egress node. At each station the QoS resources are requested to be reserved by the incoming QoS signalling message, reservation takes place and a result indication is then returned into the upstream direction. This is performed along a path from starting from the ingress node towards the egress node which is determined by some unicast routing protocol.

On the other hand, as illustrated in Fig. 1B, multicast resources are allocated on the path from the receiver towards the sender. In other words, the multicast resources configuration is initiated at the egress node and proceeds upstream towards the ingress node. At each node the multicast resources are then configured by e.g. setting the multicast group IP address for the session and the source of this session at each node. The path along which the configuration of multicast resources is also determined according to some unicast routing protocol.

In such a case where unicast routes are determined between a source and a receiver in two different directions (from the source to the receiver like in Fig. 1A and from the receiver to the source like in Fig. 1 B) there is a significant likelihood that the two routes do not coincide but are different. This means that if now a QoS reservation is to be made for a multicast tree, the QoS reserved route and the multicast route may differ. In other words, the multicast tree may be not configured in the reserved-path, resulting in a non QoS-aware multicast tree. This is illustrated in Fig. 1C which shows that asymmetric routes may compromise the building of QoS aware multicast trees, since the path from the sender to the receiver may be different from the opposite direction.

Most of the solutions currently proposed by the research community, which uses single-pass signalling schemes for resource reservation, were conceived without multicast support for simplicity. For instance, the QoS-NSIS Signalling Layer Protocol (QoS-NSLP) [see e.g. A. McDonald, "NSLP for Quality-of-Service signalling", The Internet Engineering Task Force - IETF, Internet Draft Jun 2006] aims to provide signalling exchanges, where the messages carries information about the QoS resources required by incoming unicast flows in networks supporting the Next Steps in Signalling framework [see e.g. S. v. d. Bosch, "Next Steps in Signalling (NSIS): Framework", The Internet Engineering Task Force - IETF, RFC4080, Jun 2005].

Several approaches have addressed the problem of the coexisting use of QoS and multicast to deliver multicast sessions with QoS assurances. Previous centralised or distributed QoS multicast routing approaches [see e.g. Z. Li and P. Mohapatra, "QMBF: A QoS-aware Multicast Routing Protocol", Computer Communication, 2003] operate by computing the best paths and creating the multicast tree on the selected path without reserving resources on the path therefore being unsuitable for networks with dynamic bandwidth modifications.

Previous approaches that support multicast and resource reservation [see e.g. RFC2205, or J. Cui, L. Lao, M. Faloutsos, and M. Gerla, "AQoSM: scalable QoS multicast provisioning in DiffServ networks". Computer Networks 50, January 2006] implement different solutions operating separately for creating QoS-aware multicast trees, based on a two-pass signalling scheme. Whereas a multicast protocol computes the best route between source and destination (looking for the shortest based on, for instance, network resource availability and delay propagation characteristics) and creates the multicast tree in the matching path, a resource reservation protocol finds and merges the reserved-path with the multicast tree by flooding the network with probe messages. These approaches have the drawbacks of increasing the signalling overhead and session set-up delay due to the large number of signalling messages for flooding, probing and reserving the resources. Moreover, these solutions add complexity in the networks, because they need different protocols/mechanism for providing QoS and multicast resources.

The *Overlay for Source-specific Multicast in Asymmetric Routing* (OSMAR) proposal aims at solving the problem of QoS and multicast in environments with asymmetric routing [see e.g. P. Mendes, "OSMAR: Overlay for Source-specific Multicast in Asymmetric Routing Environments," Technical Report, DoCoMo Euro-Labs, 2004]. In this proposal, the *Multicast Routing Information Base* (MRIB) of each router is updated with the address of the next hop to reach the network of each requested multicast source. Moreover, the PIM-SSM is triggered at the access-routers near the receivers to create the multicast tree in the previously selected path. However, this solution is only aimed at environments with PIM-SM and PIM-SSM multicast models, does not reserve resources for the incoming sessions, and it requires the use of separate schemes to control QoS and multicast.

US-6,751,221 discloses a data transmitting node and network interconnection node suitable for home network environment. A video server transmits video data via multicast through the internet towards a private IP network where it is received by a connection device which forwards the received data via a broadcast type network towards a receiving terminal. In the broadcast type network QoS reservation is performed.

### SUMMARY OF THE INVENTION

According to one embodiment there is provided a method for performing quality of service (QoS) resource reservation and configuration of multicast network resources for multicast sessions in a network, said method comprising:
in response to a request from a receiver to receive with some QoS requirement a session originating from a source, performing the following:
   forwarding a reservation message along the downstream path from said source to said receiver through nodes of said network, whereas each node along said path performs the following:
      a) in response to receiving said reservation message, reserving QoS resources and configuring multicast resources for the link from said node to the next downstream node in said path;
      b) forwarding the reservation message to said next downstream node;
      c) repeating said steps a) and b) until in each node along said path from said source to said receiver said QoS resources are reserved and said multicast resources are configured.

By reserving QoS resources and configuring the multicast resources along the same path in the same direction the different paths between multicast session and assured QoS can be avoided. In this manner an efficient creation of QoS assured multicast trees becomes possible.

According to one embodiment the method further comprises:
if for a requested session the QoS resources are already reserved and the multicast resources are already configured, forwarding said reservation message to the next downstream node without performing QoS resource reservation and multicast resource configuration.

This avoids the unnecessary waste of resources and signalling.

According to one embodiment said multicast resource configuration comprises:
setting the multicast group IP address for the link from the node where said configuration is to be performed to the next downstream node.

The setting of the multicast group IP address along the path from the source towards the receiver is an efficient way of configuring multicast resources and creating multicast trees.

According to one embodiment said multicast resource configuration comprises:
allocating a multicast channel to the session which is to be a multicast session, said multicast channel comprising the address of the source of said channel and the multicast group IP address.

According to one embodiment the method further comprises:
if in a node which receives said reservation request message for a certain session the QoS reservation and the multicast resource configuration has already been performed, checking whether the next downstream node for the now requested session is the same as the one for which the reservation and configuration has already been made,
if not, reserving QoS resources and configuring multicast resources for link to the next downstream node of the requested session to thereby establish a new branch in the multicast tree.

In this manner the multicast tree can be generated in a manner unified with the QoS resource reservation.

According to one embodiment a multicast session is identified by a session object which includes the source of the session, the QoS requirements of the session and its multicast group IP address.

In this manner a session and its corresponding QoS resources and its corresponding multicast resources can be identified and enable to recognise whether for the same session there exists already a multicast route or tree.

According to one embodiment said configuring of multicast resources comprises:
storing the IP address of the preceding upstream node in said node; and
using the IP addresses of preceding nodes to trace the reservation and configuration path upstream to complete the configuration of the multicast resources along said path.

In this manner the multicast tree maintenance can be "outsourced" to an external mechanism such as PIM-SSM, and the method thereby is compatible with existing multicast tree management approaches.

According to one embodiment said QoS resource allocation is performed on a class based reservation scheme such that for a service class in which a flow requests resources at first a minimum bandwidth is allocated and depending on the further development of the resource requirements in this class the allocated bandwidth is increased or decreased.

This allows for an efficient allocation of resources.

According to one embodiment said reservation message requests the modification or release of a resource, said modification or release request being processed in the same manner downstream from the network agent where the request was received towards the network agent where the receiver accesses the network.

According to one embodiment said reserve message is a refresh message with a refresh flag being set, said refresh message being periodically sent downstream towards the access agent.

This takes into account that e.g. a node may move or fail, or that the QoS requirements for a session or a flow may change.

According to one embodiment said reservation message is sent with the router alert option being set so that each network agent can intercept and process the request and reserve message.

This enables each node in the path to examine and process the message.

According to one embodiment said reserve message is forwarded along network agents, whereas said network agents comprises edge agents located at the edge of domains and core agents located in the core of domains, whereas a connection between domains can only be achieved through the edge agents, and whereas the state information stored by the core agents comprises:
for each outgoing interface connecting to another network agent, storing the QoS class, the IP address of the ingress requesting agent, and the reserved bandwidth as QoS state, and
for each outgoing interface connecting to another network agent, storing the source IP address and the group IP address as the multicast state; whereas the edge agents further store
for each session and each flow the flow identifier, the QoS class, the source IP address, the multicast group IP address, the required bandwidth, the egress IP address, the IP address of the access agent and the QoS path.

According to one embodiment there is provided an apparatus for performing quality of service (QoS) resource reservation and configuration of multicast network resources for multicast sessions in a network, said apparatus comprising:
a module for performing the following operations in response to receiving a request from a receiver to receive by said receiver with some QoS requirement a session originating from a source:
   forwarding a reservation message along the downstream path from said source to said receiver through nodes of said network, whereas each node along said path performs the following:
      a) in response to receiving said reservation message, reserving QoS resources and configuring multicast resources for the link from said node to the next downstream node in said path;
      b) forwarding the reservation message to said next downstream node;
      c) repeating said steps a) and b) until in each node along said path from said source to said receiver said QoS resources are reserved and said multicast resources are configured.

According to one embodiment there is provided a module for carrying out the method according to one of the embodiments of the invention.

According to one embodiment there is provided a computer program comprising computer executable code which when being executed on a computer enables said computer to carry out a method according to one of the embodiments of the invention.

### BRIEF DESCRIPTION OF THE DRAWINGS

Fig. 1 schematically illustrates the QoS and multicast resource reservation schemes according to the prior art.
Fig. 2 schematically illustrates the QoS and multicast resource reservation scheme according to an embodiment of the invention.
Fig. 3 is a flowchart illustrating an embodiment of the invention.
Fig. 4A schematically illustrates a generic environment in which the invention may be used.
Fig 4B schematically illustrates an environment according to an embodiment of the invention.
Fig. 5 schematically illustrates the interfaces of a node according to an embodiment of the invention.
Figs. 6 and 7 schematically illustrate the operation of nodes according to embodiments of the invention.
Figs. 8A and 8B schematically illustrate the operation of embodiments of the invention
Figs. 9 schematically illustrates a QoS resource allocation mechanism according to an embodiment of the invention.

### DETAILED DESCRIPTION

Before explaining the embodiments of the invention in detail, some terms used in the following description are explained.

Access router - Router linked to the access network in which a receiver belongs to;
Ingress edge device: for a given flow, an edge device of a network via which the flow enters the network is an ingress device;
Egrress edge device: for a given flow, an edge device of a network via which the flow leaves the network is an egress device;
Downstream - Direction from the ingress node to an egress or access node;
Upstream - Direction from the egress node to an ingress node;
Unicast Routing Information Base (unicast RIB) - The unicast topology table;
Multicast Routing Information Base (multicast RIB or MRIB) - The multicast topology table typically derived from unicast RIB. PIM protocols use the MRIB to decide where to send join/prune messages;
Reserved Path - The path in which a Reserve message has controlled resources.

In the following embodiments of the invention will be described.

In one embodiment there is provided a single-pass QoS resource reservation and multicast tree control solution which enables the dissemination of multicast session content in class-based QoS-aware domains efficiently, where the multicast resources are configured when operating for reserving QoS resources. Multicast resources configuration relates to the creation of multicast trees, and QoS resources to the reservation of an amount of bandwidth to a selected service class on each node along the data path. This mechanism preferably should support open interfaces, allowing simultaneously an easy interaction with different protocols and mechanisms and a straightforward deployment.

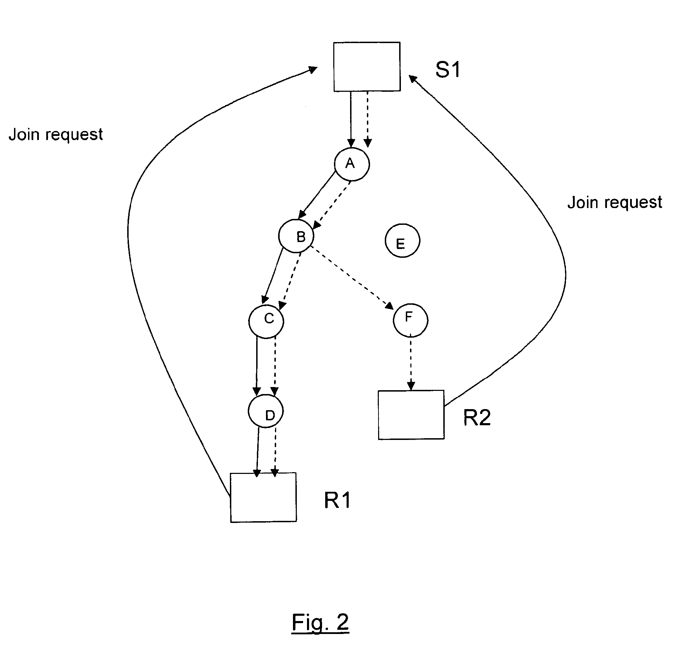

An embodiment of the invention will now be explained in connection with Fig. 2. In this example source S1 advertises that it is ready to transmit some session, and this advertisement reaches receiver R1 which decides to participate in the session, Through a join request which may reach the source in way independent of the actual multicast transmission it informs the source S1 that it wishes to receive the session. The join request also indicates the QoS requirements which the receiver R1 wishes to be fulfilled.

Thereafter the resource reservation mechanism according to one embodiment begins. The source starts the reservation process by sending a reservation message to node A. The reservation message contains an indication of the QoS requirements and a definition of the session. In node A there is then performed a QoS resource reservation in accordance with the QoS requirement and furthermore a multicast resource configuration is carried out.

Then the procedure continues by forwarding the reservation message downstream to node B. In node B also the QoS reservation is carried out and the multicast configuration is set. After completion the reservation message is forwarded to node C which also executes the QoS reservation and the multicast configuration, and then the reservation message is forwarded to node D which also performs QoS reservation and multicast configuration downstream towards receiver R1.

In this manner the QoS reservation is performed along the same path and the same direction (from the source towards the receiver) as the multicast configuration. Contrary to the prior art this ensures that the route along which the QoS reservation is performed and the route along which the multicast configuration is executed do not differ, thereby ensuring the QoS reservation along the multicast path.

According to one embodiment the multicast configuration in a node comprises the setting of the multicast group IP address in the node. In one embodiment such a multicast configuration is performed for the outgoing interface to which the multicast session to be configured, in other words for the link from the node to its next downstream node. The group IP address may be chosen from a pool of available multicast group addresses. Together with the source IP address (in Fig. 2 the address of source S1), the session identifier (which identifies the specific session), and the outgoing interface for which it is set it defines a source specific multicast session at the node of a specific downstream direction (i. e. to the next downstream node).

In this manner a multicast session in a specific node can be configured together with the QoS reservation. The path shown in Fig. 2 (nodes A-B-C-D) along which the QoS reservation and the multicast configuration is carried out may be determined by any unicast routing protocol.

Once the multicast configuration and the QoS reservation has taken place in a certain node, the thus configured multicast session may be joined by other nodes. If e. g. receiver R2 wishes to join the same session it sends a corresponding request to source S1. From there the reservation request (indicated by the dotted arrow in Fig. 2) is forwarded to node A where it is determined that the requested multicast session already exists in this node A, in other words the multicast configuration and the QoS reservation has already been carried out for the link to the next downstream node (node B) which was determined base on some unicast protocol. Accordingly no further action needs to be taken and the reservation request message may just be forwarded (indicated by the dotted arrow) to the next downstream node B. Here it is determined that the requested session with QoS assurance also exists already, however, not for the next downstream node F determined by some unicast routing protocol for the now requested session but for the link from B to C. Accordingly for the link from B to F the QoS reservation still has to be performed, and moreover the multicast configuration has to be carried out. This can e.g. be done by setting the multicast group IP address which has already been set for the links from A to B and from B to C also for the link B to F. This corresponds to the establishment of a new branch for the QoS assured multicast session which already existed from A to D, the new branch leading from B to F. Then the procedure continues by executing the QoS reservation and the multicast configuration for the link from F to R2, thereby completing the QoS reservation and multicast resources configuration along the downstream path from the source to the receiver.

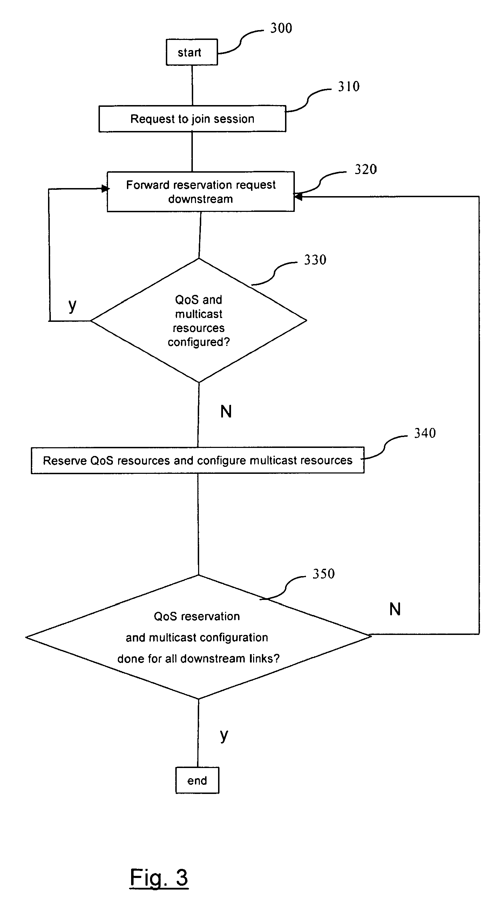

The whole procedure according to one embodiment is schematically illustrated in the flowchart shown in Fig. 3. After an initial forwarding of the reservation request (operation 310) it is checked whether the QoS resource reservation and multicast resource configuration are already done (operation 320), if so the reservation message is forwarded downstream to the next node (operation 320). If not, in operation 340 the reservation and configuration are made. In operation 350 it is checked whether the reservation and configuration are done already for the whole path, if not the flow returns to operation 320 otherwise the procedure ends.

Further embodiments will now be explained in the following. According to one embodiment there is provided a flexible solution for accomplishing QoS resource reservation and multicast tree control over heterogeneous environments with dynamic bandwidth modifications and asymmetric routing, which is hereinafter referred to as *Single-pass Resource Reservation and Multicast Tree Control* (abbreviated ReCast). In the following there will be made reference to this mechanism as "ReCast" mechanism which is able to control the QoS and multicast resources simultaneously through a single-pass signalling scheme. Alternatively according to a further embodiment described later embodiment the ReCast mechanism can be configured to interact with an external multicast protocol by indicating the QoS path for creating the multicast trees.

As will be apparent from the following description the ReCast mechanism is implemented by network agents which are referred to as "ReCast" agents and which with their functionality implement the ReCast mechanism. The network agents may be implemented in the nodes of the network.

The ReCast single-pass scheme enables the distribution of session content with QoS guarantees in networks with asymmetric routes, allowing the construction of multicast trees with an efficient shape. Moreover, the signalling overhead, session set-up time and complexity of the environment is reduced, since a unified solution is used to control the QoS resources and multicast trees in networks with dynamic bandwidth capacity behaviour. According to one embodiment, the proposed solution is based on the following:
- The sender of a multicast session defines the QoS requirements, priorities and rates of each multicast flow, called *session object;*
- Each receiver gets the multicast session object from the sender by any off-line or on-line means;
- Each receiver sends the session object to an agent in the network to which it is connected at the session set-up time;
- A protocol or mechanism in the network agent uses the session object to request the allocation of network resources and the creation of the multicast trees for each flow of the multicast session in each domain along the session path (from the sender to receiver). The QoS assurances and session connectivity in unicast inter-domain links are performed by an external protocol or mechanism. In environments with end-to-end multicast support, ReCast operates for controlling QoS-aware multicast trees from ingress-to-access router;
- Routers according to one embodiment IP Routing Alert Option [RFC2113]. This enables them to examine the received packets and to recognise the ReCast relevant messages included therein.

The ReCast functionalities are supported by network agents called ReCast Edge agent (ReCast-E) and ReCast Core agent (ReCast-C). The ReCast-E agents are statefull, enabling the control of per-flow QoS resources and multicast state. A ReCast-E agent Implements internal and external interfaces, and initiates the signallings. The internal interface is used for instance to interact with other ReCast agents, while the external interface is used for instance to communicate with external protocols or mechanism. On the other hand, ReCast-C agents are reduced state (per-class) and only support internal interfaces for reacting when signalled to configure the required QoS and multicast resources.

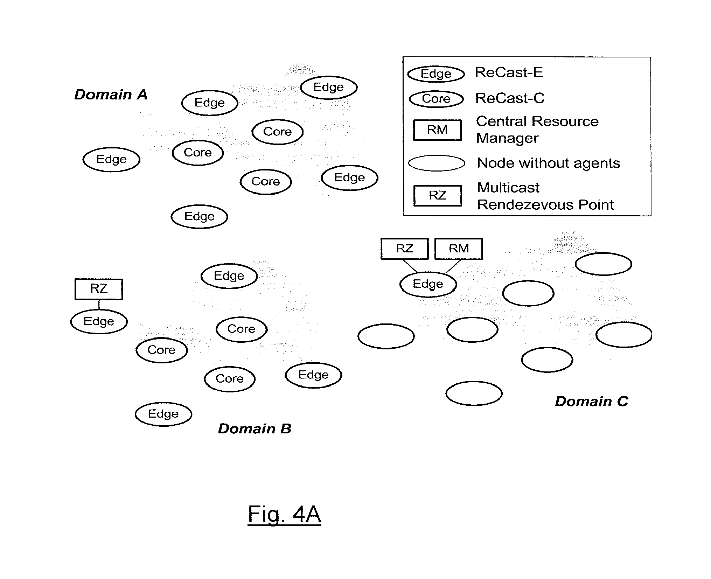

The ReCast functionalities can be supported in a centralised or decentralised manner. Fig. 4A shows an example of ReCast agents' location in a generic scenario. In domain *A*, the ReCast agents are working in a distributed manner, where ReCast-E agents are placed at the edge nodes together with network agents and ReCast-C agents are in the core nodes. In domain *B*, the ReCast agents are also placed in a distributed manner, however, the multicast control is performed by a Rendezvous Point/Multicast Controller mechanism (e.g. as used by the PIM-SM model). This way, the ReCast-E agents interact with the Rendezvous Point to acquire information about the local multicast model as well as to request the allocation of a multicast channel to be used for each flow in the domain. Domain C has its QoS and multicast resources controlled in a centralised manner, where the resource controller and the ReCast-E agent are located in the same node.

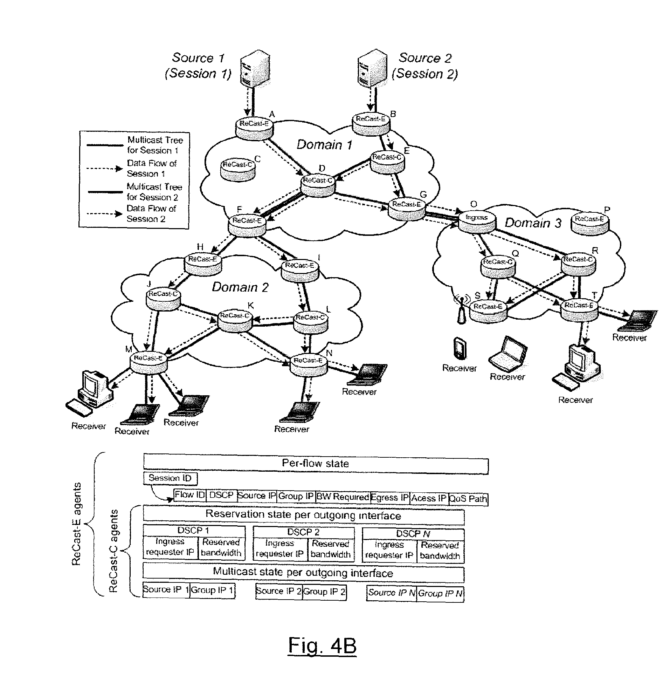

Fig. 4B in the upper part schematically illustrates a scenario where from sources S1 and S2 multicast sessions (session 1 and session 2) are distributed to several receivers. Session 1 is distributed via edge agent A to core agent D, from there it branches to edge agents F and G. Session 1 enters Domain 2 through edge agent H, passes through core agent J where it branches to edge agent M and to core agent K From core agent K it is forwarded to edge agent N. On the other hand session 1 enters Domain 3 through edge agent O from where it is forwarded to core agent Q where it branches to edge agents S and T.

Session 2 enters Domain 1 at edge agent B, is forwarded to core agent E where it branches to agents G and D, the later forwarding it to agent F It then enters Domain 2 through edge agent I, is forwarded to agent L, where it branches to agents K and N. Agent K forwards it to edge agent M.

Session 2 enters Domain 3 through edge agent O, is forwarded to agent R where it branches to edge agents S and T.

Each session has a global identifier (not shown), whereas the flows of a session have local identifiers (also called channels).

The lower part of Fig. 2B illustrates the state which is maintained in the edge agents and the core agents, respectively. As mentioned already, both types of agents are stateful (i.e. maintain state), but the core agents in a somewhat reduced manner.

According to one embodiment the edge agents maintain session and per-flow state regarding the multicast state and the QoS resources. The session is identified by the (global) session identifier (session ID), and as shown in Fig. 4B for one corresponding flow (having the identifier "FLOW ID") there is maintained state information for each flow of the session. This includes state regarding the QoS requirements (such as the QoS class) and state regarding the multicast configuration (such a, the multicast IP address and the source IP address). According to one embodiment this state information includes the information shown in Fig. 4B which includes e.g. the DSCP field (which is an indicator of the QoS class, the so called "differentiated services code point which in the ToS field indicates the service class), the source IP, the Group IP (of the multicast group), the required bandwidth, the IP of the egress agent (through which the session again leaves the domain), and the QoS path. In this manner for an edge agent state is maintained for a session regarding its QoS state and its multicast state. While as indicated in Fig. 2B this information is only stored in the edge agents, both the core agents and the edge agents store the following state information:
Regarding the QoS reservation state, for each outgoing interface (there may be multiple ones, e.g. if the agent is a branch node and has outgoing connections to more than one nodes) there is maintained a state indication for each QoS class (here DSCP 1, DSCP 2, and DSCP N), and for each of these classes the ingress requester IP and the requested bandwidth are stored.

Regarding the multicast state, for each outgoing interface there is stored the source IP and the group IP address of the multicast group.

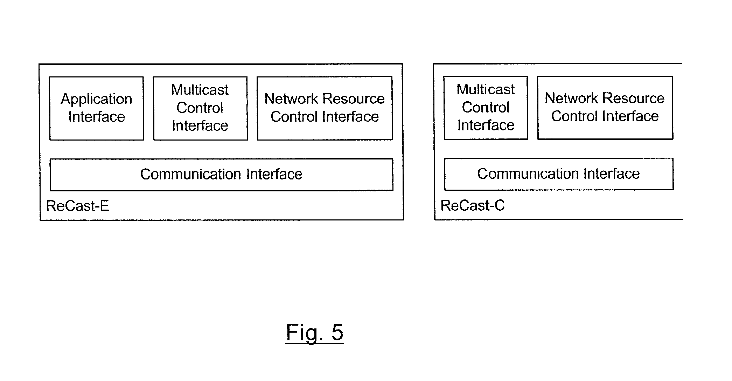

In order to support QoS resource reservation and multicast tree control over heterogeneous environments ReCast supports the following interfaces which are schematically illustrated in Fig. 5:
- Interfaces:
   - Application Interface: Used to expose the ReCast mechanism or ReCast nodes to external mechanisms or protocols by enabling the request of resources and feedback its accomplishment. For instance, it can be used to request ReCast to configure network resources for flows in a domain (e.g. interacting with an external session signalling protocol or QoS mapping mechanism). In addition, ReCast can receive indication to re-allocate resources of ongoing session-flows to another service class or to release network resources associated with flows when a session finishes or due to the movement of the user to another domain;
   - Multicast Control Interface: Used to acquire information about the multicast channel allocated for each flow in a domain. When a flow ends, ReCast can trigger the multicast controller mechanism to release the allocated channel (i.e. the multicast group IP address). In one embodiment multicast channel is a two-tuple <source IP address, group IP address>, being the group IP address generated by the source (in SSM). In embodiments of the invention, the source of any multicast channel is located in an ingress device, it should be noted that it may be different from the device which creates the flows which then later are transmitted in multicast. I.e. in Fig. 4B the source devices of the flows are Source 1 and Source 2, however, the sources of multicast transmission are the devices A and B which initiate the multicast transmission by allocating a multicast channel to the flows. The multicast control interface may also be used to directly create, modify or release multicast state in network routers by configuring the multicast classifiers/replicators for an assigned outgoing interface (acquired by the Communication Interface). The addition of entries in the MRIB is accomplished through this interface as well as the triggering of the multicast protocol in order to create/maintain multicast trees. Moreover, ReCast uses this interface to query for control information, such as check whether there is installed an multicast tree or retrieve a path from the MRIB;
   - Network Resource Control Interface: Used to acquire information about the current available network service classes and available bandwidth. The QoS can be controlled by reserving resources or conditioning the traffic, such as by properly configuring schedulers and policers respectively. Reconfiguration of resources is also supported by ReCast, such as by reconfiguring a marker to map the ongoing flows into another service classes or a reservation preciously accomplished. In cluster with a central resource controller, ReCast uses this interface to trigger the central controller (e.g., bandwidth broker) for the accomplishment. Moreover, ReCast can interact with SLS controllers for network provisioning or query for resource information for instance;
   - Communication Interface: Used to exchange messages which carry control information as support for the operations of the ReCast agents. Moreover, ReCast uses this interface to interact with the routing protocol as support for system robustness. For instance, ReCast interacts with OSPF to detect re-routings, once the later detects when a network interface becomes down, through supporting indications by lower-level protocols (see for example J. Moy, "OSPF Version 2", The Internet Engineering Task Force - IETF, RFC2328, Apr 1998). In addition, it is used to retrieve the outgoing interface from the unicast Routing Information Base (RIB).

Figure 5 shows the interfaces in accordance with the type of the ReCast agent. The exchange messages, which carry control information, between ReCast agents are implemented through the communication interface.

These ReCast messages according to one embodiment comprise the following
- Reserve: This message indicates the ReCast agents the required reservation/configuration functionality and carries the amount of QoS and multicast state as support for the operations. The ReCast agents support resource reservation, modification, releasing and refreshing, whereas all of these operations may be triggered by a similar but slightly modified (e.g. by a flag indicating the functionality) reserve message
- Response: Used to inform about the status of the requested operation, for example, accepted or rejected. Moreover, it is used to feed back a node as soon as a failure is detected, such as when a node does not satisfy the required QoS. This way, the reverse path is signalled for realising the resources previously installed. When resulting from a refresh operation, the Response message carries information about the network capability in the bottleneck agent of the correspondent Reserve message. In addition, when a node is informed by the routing protocol that an interface is down, a Response message, with a code indicating rerouting, is sent to all ingress nodes stored locally.

ReCast in one embodiment has two operation methods (according to other embodiments only one of he two methods may be implemented) to control QoS and multicast resources as follows:
- Multicast Full Control (MFC): The MFC method aims to allocate (or configure) QoS and multicast resources simultaneously, as much as control the maintenance of the state storage and provide QoS/multicast robustness. ReCast allocates the QoS by reserving the requested amount of bandwidth in a per-class basis, which may be the bit-rate or the committed-rate of the session-flow. The multicast resources are controlled by creating the multicast tree at the same time as the accomplishment of the QoS reservation and maintaining the correspondent state until it is necessary to modify/ release the session resources (e.g. due to the user mobility, session end, or re-routing operations). As soon as detected an rerouting event, ReCast configures the QoS and multicast resources in the new path;
- Multicast Reduce Control (MRC): The MRC method also addresses to allocate QoS and multicast resources simultaneously, except without maintaining the multicast trees, which is accomplished by the external multicast controller mechanism, such as PIM-SSM. Hence, ReCast accomplishes the resource reservation and installs the multicast state, e.g. by entering the IP address of the preceding node into the MRIB. In this manner there is maintained information which allows a multicast controller to identify the path along which the QoS resources have been reserved, and thereby it becomes possible to install the multicast tree in exactly these nodes. For that purpose at the egress-/access-router of the domain the multicast controller is triggered for creating the multicast tree in the path which ReCast added into the MRIB at each node. As the multicast controller covers the reserved-path and installs the multicast state, e.g. by setting the multicast group IP address in these nodes, it feeds the multicast information in its data base as support for the maintenance of the multicast trees. Therefore, ReCast does not store multicast information at the forwarding nodes, relying on the information stored by the multicast controller mechanism for accomplishing consults and checks.

One may therefore say that in the case of MRC the multicast resource configuration comprises the storage of the IP address or the preceding node in the MRIB of each node where the QoS reservation is made, and afterwards the multicast configuration is completed by tracing the thus established route back for the completion of the multicast tree, e.g. by setting the multicast group IP address for each of these nodes. This may be done e.g. by a PIM-SSM controller.

According to one embodiment the decision about the usage of each of the above described methods can be selected by static and/or dynamic configuration. The former can be configured by the service provider according to its business model or to some agreement with its neighbours. The dynamic configuration can be done on-demand by an external protocol/mechanism or another ReCast agent. In these cases, an indication is passed by an interface or by a message to inform which method must be used for a specific set of sessions or flows.

The mechanism comes along with certain advantages some of which are given below:
- Increases the system flexibility, by providing different operational methods for QoS and multicast operations;
- The network operator may reduce its operational costs by using a unified solution for QoS and multicast operations over environments with dynamic bandwidth modifications and asymmetric routing;
- Controls the shaping of multicast trees in the presence of a multicast protocol (such as PIM-SSM) or fully controls the multicast trees in the absence of a multicast protocol;
- Reduces the session set-up time;
- Reduces the signalling overhead.
- avoids different paths for QoS reservation and multicast configuration

More detailed descriptions of embodiments of the invention will follow below.

According to one embodiment ReCast aims to reserve QoS resources in a per-class basis and simultaneously create the multicast tree in the sender-to-receiver session path through the support of the communication interface for signallings. ReCast provides a flexible multicast control, where the network administrator configures the method in which ReCast operates for controlling QoS and multicast without direct performance implications, since the user will receive the data in the same way.

ReCast-E agents needs to maintain state about the current sessions and flows in a domain. Therefore, a ReCast-E keeps per-session and per-flow state, which may include a list of the paths in which ReCast has configured the resources, the class of service, bit rate, source address, group address and the egress agent of each flow of a session. The ReCast-C agents store only the lists of the available classes of service and multicast group address for each outgoing interface In this connection reference is again made to Fig. 2A illustrating the state information being stored by the ReCast agents. The ReCast agents may use a soft-state approach to maintain per-session and per-flow state. This means that e.g. state is periodically refreshed, thereby taking into account any changes which may occur such as e.g. the movement or failure of a node.

The communication with a multicast controller scheme in the domain allows the usage of ReCast independently of the underlying multicast model. Thus, for each incoming flow (based on the session object) ReCast interacts with the multicast controller (by using its interfaces) to request the allocation of a multicast channel identifier. The multicast channel identifier is used by ReCast to control the multicast tree creation during the session set-up. For instance, a multicast channel identifier can be allocated by a SSM multicast controller (SSM channel <Source, Group>) or by a *Multicast Address Dynamic Client Allocation Protocol* (MADCAP - RFC2730). When a flow ends, ReCast triggers the multicast controller mechanism to release the allocated channel.

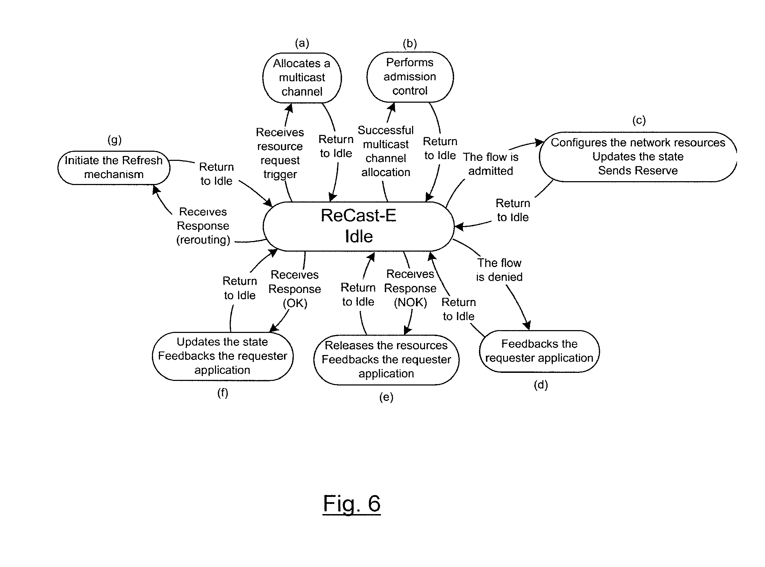

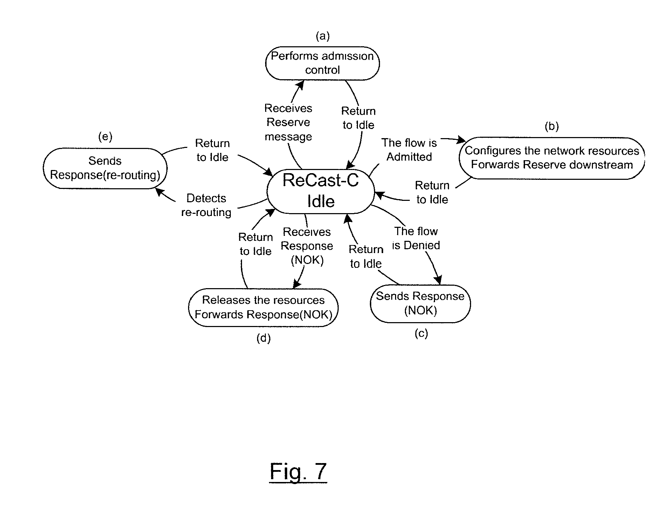

The functionalities provided by ReCast are described as follows, where the explanation is in accordance with Figure 6 and Figure 7.
- Resource Reservation: Operates downstream for configuring the QoS and multicast network resources. QoS resource configuration addresses to reserve an amount of bandwidth associated with a service class. Multicast configuration means to directly create multicast trees (for MFC methods) or update the MRIB with the session path when applicable (for the MRC method). When triggered by an external application/mechanism at an ingress router, via the Application Interface, the ReCast-E agent as shown in Fig. 6 goes to the state a to allocate the needed multicast channel via the Multicast Control Interface (state *a*). The multicast channel may be allocated by setting the multicast group IP address for this session and its source. It may therefore consist of a tuple consisiting of the multicast group IP address and the source of the multicast session, the tuple being assigned to the session to thereby allocate the multicast channel. After successful multicast channel allocation, The ReCast-E goes to the state *b* to perform the admission control by checking if the local outgoing interface has enough resources for accepting the incoming flow, in case the indicated session is not yet installed in the assigned outgoing interface. Upon admitting the flow, the ReCast-E goes to the state *c* to configure the local network resources, update the required state and send a Reserve message towards the access-router. All nodes along the data path, which is provided by the unicast routing table, process the message since it has the routing alert option set. Upon receiving the Reserve message, a ReCast-C agent enters the state *a* in order to perform the admission control. In case the request is locally acceptable, the ReCast-C enters the state *b* to configure the local network resources and to forward the Reserve message downstream. When an agent denies a flow (state c*)*, a Response message is sent back in the reverse path with a code (NOK) informing the failure, and the resources are released by each reached node (e.g., Figure 7, state *e*). The same reservation operations of the ReCast-C agent are accomplished by the ReCast-E agents at the egress and access routers. After having accomplished the reservation, the ReCast-E agent at the access router composes and sends an Response(OK) message to the ingress router, which then updates the path state and triggers the requester application to both, confirm the request (Figure 6, state *f*) and informs about the allocated multicast channel.;
- Resource Modification: Operates downstream for modifying a current session reservation, such as when necessary to re-adapt the quality level of a session. The operations are similar as described for resource reservation, except for the control tests which does not avoid the operation when the section is present;
- Explicit Resource Releasing: Operates upstream for releasing the indicated amount of resources in the nodes along the path from the egress-/access to the branch node. When triggered at an egress/access router, the ReCast-E agent, first checks whether the indicated session is configured in more than one outgoing interface. If so, only the resources of the outgoing interface that lead to the indicated receiver are released, a Reserve message is composed with a flag set indicating that the next nodes are not able to release the resources in order to keeps the session working in the remaining paths, and sent to the ingress router. All nodes along the path indicated by the MRIB first check whether the message enables the releasing. If so, the resources are released and the message forwarded upstream, if not, the message is only forwarded. Upon received the reserve message (which operates in fact as a release message due a flag being set but which except to the flag being set is a normal reserve message), the ingress router composes and sends a Response(OK) message to the agent requester from which the release message originated, which then trigger the requester application with a confirmation code;
- Resource Refreshing: Operates downstream for controlling the state storage by indicating the amount of state that must be kept. When the refresh time expires in a ReCast-E agent at an ingress router, it composes a Reserve message with the refresh flag set as *on* and with the aggregated amount of state for the flows that shares the same reserved path and service class, and sends it downstream towards the access router. When operating in the MFC method, the multicast trees associated with the matching flows are also filled in the signalling message, for their maintenance control. Based on the information carried in the intercepted signalling, each ReCast agent in the data path first retrieves from the unicast table the IP address of the next hop and compares it with the path indicated by the message. When different, the message is processed as a reservation message, and at the end of the operation the same message is forwarded downstream. When equals, the ReCast agent stores the difference between the current bandwidth reserved for the indicated service class and the amount derived from the message, and forwards the message downstream. After having accomplished the refresh, the ReCast-E agent at the access routers composes a Response(OK) message and sends it to the ingress router. For each service class, the ReCast agent decreases the current reservation with the amount which was not refreshed upon expired the clean-up time.

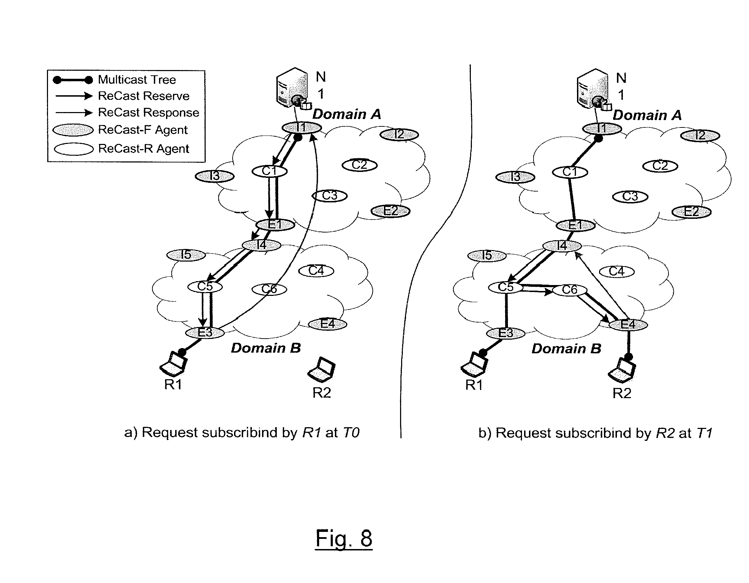

Fig. 8 illustrates the control of QoS and multicast resources in two generic scenarios composed by two domains, and one multicast session with one flow and two receivers. In domain *A*, ReCast is configured to operate in the MFC method (i.e., full control of the QoS and multicast resources) while in domain *B* ReCast operates in the MRC method (i.e., without maintenance of the multicast tree). Assume that an external application triggers ReCast in the ingress agents of the domains in the sender-to-receiver path to request resources for a session. Moreover, the multicast channel allocation is performed by a SSM multicast controller is this example. In order to simplify the explanation, it is assumed that the resources allocated for the service classes are not overloaded in both domains.

Figure 8.a shows an example where receiver *R1* wants to subscribe the multicast session *S1*, which is composed by one flow *F1* and supplied by source *N1.* Therefore, the application protocol on *R1*, attached to the network agent *E3*, composes the session object and uses a signalling message to discover the nearest branch point in the direction to *S1.* Upon reaching the branch point in the ingress node *I1* (there is no branch point which is closer to the receiver), the application protocol triggers ReCast to configure the QoS and multicast resources for *S1*. Firstly, ReCast triggers, via the Multicast Control Interface, the SSM Multicast Controller mechanism to allocate a local multicast channel to be used by *S1* in domain *A* (in this example the multicast channel is identified by the multicast tuple *<I1, G1>).* Here 11 is the IP address of the source of the newly established multicast session, the ingress node I1, whereas G1 is the multicast group IP address which may be chosen freely from a pool of available multicast group IP addresses if a new session is to be established. After that, ReCast assigns the outgoing interface (*oif*) from *I1-to-C1* for processing through the Communication Interface, which firstly checks whether the requested resources (derived from the session object) are currently configured in the assigned *oif.*

Since *S1* is not present in the assigned *oif*, ReCast reserves the required bandwidth, creates the multicast tree (via the Multicast Control Interface) and updates the per-flow data base with the information derived from the session object, including the channel identifier. Finally, ReCast composes a *Reserve* message with information about the service class, required bandwidth and multicast channel identifier, and sends it towards *E3* with the routing alert option turned on (all agents from ingress to egress can intercept the message). Upon signalled, *C1* configures the QoS and multicast resources, updates the local data base accordingly and propagates the signalling message towards *E3*. The same operations are accomplished by *E1* and *I4* accordingly.

Since the *Reserve* message received by *I4* carries a multicast channel (*<I1, G1*>), it is not required a new multicast channel allocation. Hence, Recast accomplishes the reservation and creates the multicast tree. As ReCast is configured to operate in the MRC method, the IP address of *E1* is added in the MRIB. After that, it updates the per-flow data base and propagates the *Reserve* message towards *E3*. Each agent along the downstream path accomplishes the network resources configurations and data base updating accordingly until the message reaches *E3*, where the PIM-SSM is triggered and a *Response* message is sent to *I1*.

The operations carried out by the individual nodes shown in Fig. 8A are detailed in the following:
Operation 1 (Node I1)
   - The external application/mechanism requests resources to ReCast;
   - I1 allocates a multicast channel from the SSM pool of multicast addresses;
   - 11 retrieves the outgoing interface from the RIB;
   - I1 Performs the admission control:
      - I1 Checks whether the indicated session (S1) is not present in the outgoing interface;
      - Since S1 is not present, I1 checks whether the outgoing interface has enough resources to accept the flow.
   - After successful succeeding of the admission control:
      - I1 configures the packet scheduler to reserve the amount of bandwidth for the associated service class;
      - I1 creates the multicast tree by configuring the outgoing interface to replicate the packets belonging to the indicated multicast group;
      - I1 stores the session state;
      - 11 composes and sends a Reserve message towards E3.
Operation 2 (Node C1)
   - I2 receives the Reserve message;
   - I2 retrieves the outgoing interface from RIB;
   - I2 processes the admission control. After successful succeeding:
      - I2 reserves the QoS resources;
      - I2 creates the multicast tree;
   - I2 forwards the Reserve message
Operation 3 (Node E1)
   - E1 performs the same operations as in operation 2
Operation 4 (Node I4)
   - I4 receives the Reserve message;
   - I4 does not allocate a multicast group since it is filled in the Reserve message;
   - I4 retrieves the outgoing interface;
   - I4 performs the admission, where after successful accomplishment performs the following:
      - Configures the QoS resources;
      - Do not create the multicast tree since ReCast is configured to operate in the MRC method;
      - Adds in the MRIB the IP address of E1;
      - Stores the state associated to S1;
      - Forwards the Reserve message.
Operation 5 (Node C5)
   - performs the same operations as in operation 4 and adds the IP address of I4 into the MRIB
Operation 6 (Node E3)
   - Receives the Reserve message;
   - Retrieves the outgoing interface;
   - Processes the admission control. After succeeded:
      - Adds the IP address of C5 into the MRIB;
      - Composes and sends a Response(OK) message towards I1.
Operation 7 (Node I1)
   - Receives the Response(OK) message;
   - Updates the path state in S1 entry;
   - Triggers the requester application/mechanism for informing the success of the requested operation

In the foregoing manner a single-pass QoS and multicast resource configuration can be achieved.

Figure 8B shows an example where receiver *R2* wants to subscribe *S1* in the access router *E4*. Assume that the session application used in this example is enhanced with a session control mechanism for detecting the nearest ingress node with *S1* activated. Hence, ReCast is triggered at *I4*, in which based on local information, the redundant reservation is skipped by detected that *S1* is present in the *I4-*to*-C5 oif.* Upon receiving a *Reserve* message, ReCast at *C5* detects both, that C6 is the next hop and that *S1* is not active on the *C5-to-C6 oif.* As ReCast operates in the MRC method, it reserves the bandwidth in *C5*-to-*C6* and in the *C6*-to-*E4 oifs,* and adds the IP address of *I4* in the MRIB at *C5* and the IP address of *C5* in the MRIB of *C6*. After the completion of the corresponding operations, ReCast triggers PIM-SSM at *E4* and sends a Response(OK) message to *I4*, which then updates its state and confirms the success to the requester application.

The individual operations carried out by the nodes illustrated in Fig. 8B are detailed below:
Operation 1 (Node I4)
   - The external application/mechanism requests resources to ReCast;
   - Do not allocate a multicast channel since it is carried by the trigger;
   - Retrieves the outgoing interface from RIB;
   - Processes the admission control:
      - Detects that S1 is locally activated in the outgoing interface, and hence do not configure any resources.
   - Composes and sends a Reserve message towards E4.
Operation 2 (Node C5)
   - Receives the Reserve message;
   - Retrieves the outgoing interface from RIB;
   - Processes the admission control:
      - Detects that S1 is not activated in the outgoing interface to C6;
      - Hence, checks for bandwidth availability.
   - After a successful admission control:
      - Configures the QoS resources;
      - Adds the IP address of I4 in the MRIB;
      - Forwards the Reserve message to E4.
Operation 3 (Node C6)
   - Accomplish the same operations as in operation 2.
   - Moreover, adds the IP address of C5 in the MRIB.
      Forwards the Reserve message
Operation 1 (Node I4)
Operation 4 (Node E4)
   - Receives the Reserve message;
   - Retrieves the outgoing interface;
   - Processes the admission control. After succeeded:
      - Adds the IP address of C6 in the MRIB;
      - Composes and sends a Response(OK) message towards I4.
Operation 5 (Node I4)
   - Receives the Response(OK) message;
   - Adds the path state in S1 entry;
   - Trigger the requester application/mechanism informing the success of the requested operation

In this manner the path along which the request message has to be forwarded can be shortened and the processing overhead can be reduced.

Now the refresh procedure according to one embodiment will be explained. When the refresh time expires at ingress *I1*, ReCast checks and updates the presently required resources of *F1*, composes a Reserve message with the refresh flag set as on (Reserve(R)) and sends it towards *E3*. Each agent along the data path refreshes the resources derived from the message and forwards it downstream. As long as *S1* is active on *I1,* the resources along its data path are maintained once periodic Reserve(R) messages are sent accordingly. When ReCast-E at *I1* identifies no flows locally upon the refresh time, no Reserve(R) messages are sent (since *S1* may be available no longer in this case). Thus, each ReCast agent along the data path releases the resources associated to *S1* upon reached the clean-up time.

Now the process for releasing resources according to one embodiment will be explained. When *R1* unsubscribes *S1*, ReCast is triggered at *E3* with an explicit release. After releasing the resources associated to *S1,* ReCast composes a Reserve message with a tear down flag set as *on* and forwards it upstream towards *I1.* All nodes along the reverse path release the resources until signalling a branch node (*C5* in Figure 8.b). After releasing the resources derived from the message, *C5* sets a flag which indicates that all next nodes must forward the message upstream without releasing the resources. When *I1* receives the message, ReCast-E removes the state of *F1* and the path to *E3* and sends a Response(OK) message to *E3* informing it about the success.

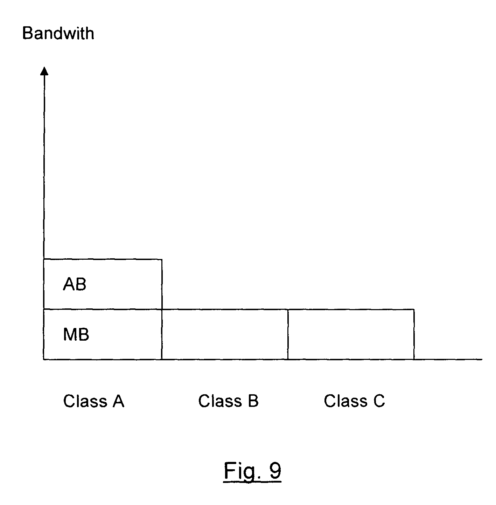

In the following the QoS reservation mechanism will be explained according to one embodiment. In this embodiment the QoS reservation is class based which means that rather than assigning a certain fixed bandwidth to a certain flow, the flow based on its QoS requirement is assigned to a certain class. For each class for which resources have been requested (in other words for each class for which corresponding flows exist) there is assigned a minimum bandwidth. This is schematically illustrated in Fig. 9 which shows three classes A, B, and C. Each of these classes is assigned a minimum bandwidth at the time when a flow comes in at a node and requests resources for one of these classes. The particular minimum bandwidth may be predetermined depending on the class.

Once it is then detected that the minimum bandwidth which initially was assigned to the class is not sufficient (e.g. because additional flows arrive which request resources in the same class), the resource allocating mechanism may increase the bandwidth allocated to such a class. The amount by which the resources of the class are increased (or decreased in case of fewer resources being necessary) equals the resources requested by the flow. This is e.g. schematically illustrated in Fig. 9 by the additional bandwidth AB which has later been assigned to class A in addition to the minimum bandwidth MB which was initially assigned.

This means that the resource allocation is performed on a "per-class" basis rather than on a "per-flow" basis. The actual bandwidth assigned to a certain class depends on the amount of bandwidth which is required by the flows falling into this class. The bandwidth actually assigned to a class may thereby dynamically vary depending on the flows and their resource requirements in a certain class. Rather than assigning fixed bandwidths to certain flows the "per-class-per-flow" reservation scheme therefore allows for a flexible adaptation of the allocated resources without unnecessarily wasting resources. In each class the allocated resources start with a minimum (if a certain class has no flow, no bandwidth is allocated at all), and depending on the evolution of the individual resource requirements in a class the corresponding resources allocated to this class are increased or decreased. Since according to one embodiment such a class based reservation scheme is applied for each outgoing interface, in other words for each outgoing link to a next downstream node, thereby an efficient allocation of the overall resources of a link and of the overall network can be achieved.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a mechanism as described in the embodiments of the invention. For example network nodes may be programmed such that they operate as the nodes described in connection with the embodiments of the invention, thereby actually implementing embodiments of the invention. A node which is programmed such that it operates as a ReCast node described before may therefore implement an embodiment of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the mechanism as described before.

## Claims

1. A method for performing quality of service (QoS) resource reservation and configuration of multicast network resources for multicast sessions in a network, said method comprising:
in response to a request from a receiver to receive with some QoS requirement a session originating from a source, performing the following:
forwarding a reservation message along the downstream path from said source to said receiver through nodes of said network, whereas each node along said path performs the following:
a) in response to receiving said reservation message, reserving QoS resources and configuring multicast resources for the link from said node to the next downstream node in said path;
b) forwarding the reservation message to said next downstream node;
c) repeating said steps a) and b) until in each node along said path from said source to said receiver said QoS resources are reserved and said multicast resources are configured.

2. The method of claim 1, further comprising:
if for a requested session the QoS resources are already reserved and the multicast resources are already configured, forwarding said reservation message to the next downstream node without performing QoS resource reservation and multicast resource configuration.

3. The method of claim 1 or 2, wherein said multicast resource configuration comprises:
setting the multicast group IP address for the link from the node where said configuration is to be performed to the next downstream node.

4. The method of one of the preceding claims, wherein said multicast resource configuration comprises: allocating a multicast channel to the session which is to be a multicast session, said multicast channel comprising the address of the source of said channel and the multicast group IP address.

5. The method of one of the preceding claims, further comprising:
if in a node which receives said reservation request message for a certain session the QoS reservation and the multicast resource configuration has already been performed, checking whether the next downstream node for the now requested session is the same as the one for which the reservation and configuration has already been made,
if not, reserving QoS resources and configuring multicast resources for link to the next downstream node of the requested session to thereby establish a new branch in the multicast tree.

6. The method of one of the preceding claims, wherein a multicast session is identified by a session object which includes the source of the session, the QoS requirements of the session and its multicast group IP address.

7. The method of one of the preceding claims, wherein said configuring of multicast resources comprises:
storing the IP address of the preceding upstream node in said node; and
using the IP addresses of preceding nodes to trace the reservation and configuration path upstream to complete the configuration of the multicast resources along said path.

8. The method of one of the preceding claims, wherein
said QoS resource allocation is performed on a class based reservation scheme such that for a service class in which a flow requests resources at first a minimum bandwidth is allocated and depending on the further development of the flow resource requirements in this class the allocated bandwidth is increased or decreased equal to the amount as requested by the flow.

9. The method of one of the preceding claims, wherein said reservation message requests the modification or release of a resource, said modification or release request being processed in the same manner downstream from the network agent where the request was received towards the network agent where the receiver accesses the network.

10. The method of one of the preceding claims, wherein said reserve message is a refresh message with a refresh flag being set, said refresh message being periodically sent downstream towards the access agent.

11. The method of one of the preceding claims, wherein said reservation message is sent with the router alert option being set so that each network agent can intercept and process the request and reserve message.

12. The method of one of the preceding claims, wherein
said reserve message is forwarded along network agents, whereas said network agents comprises edge agents located at the edge of domains and core agents located in the core of domains, whereas a connection between domains can only be achieved through the edge agents, and whereas the state information stored by the core agents comprises:
for each outgoing interface connecting to another network agent, storing the QoS class, the IP address of the ingress requesting agent, and the reserved bandwidth as QoS state, and
for each outgoing interface connecting to another network agent, storing the source IP address and the group IP address as the multicast state; whereas the edge agents further store
for each session and each flow the flow identifier, the QoS class, the source IP address, the multicast group IP address, the required bandwidth, the egress IP address, the IP address of the access agent and the QoS path.

13. An apparatus for performing quality of service (QoS) resource reservation and configuration of multicast network resources for multicast sessions in a network, said apparatus comprising:
a module for performing the following operations in response to receiving a request from a receiver to receive by said receiver with some QoS requirement a session originating from a source:
forwarding a reservation message along the downstream path from said source to said receiver through nodes of said network, whereas each node along said path performs the following:
a) in response to receiving said reservation message, reserving QoS resources and configuring multicast resources for the link from said node to the next downstream node in said path;
b) forwarding the reservation message to said next downstream node;
c) repeating said steps a) and b) until in each node along said path from said source to said receiver said QoS resources are reserved and said multicast resources are configured.

14. An apparatus according to claim 13, further comprising:
a module for carrying out the method according to one of claims 2 to 12.

15. A computer program comprising computer executable code which when being executed on a computer enables said computer to carry out a method according to one of claims 1 to 12.
